# EUROPEAN PATENT APPLICATION

(11) **EP 3 835 335 A1**
(43) Date of publication of application: **16.06.2021**
(21) Application number: 19215594.3
(22) Date of filing: 12.12.2019
(51) Int. Cl.: C08G 18/64, C08G 18/76

(54) **METHOD FOR PRODUCING WOOD-BASED PANELS**

(71) Applicant: Covestro Deutschland AG, 51373 Leverkusen (DE)
(72) Inventor: The designation of the inventor has not yet been filed
(74) Representative: Levpat

(57) **Abstract**

The present invention relates to a method of producing wood-based panels, the wood-based panels produced by the method, and use thereof. The method of producing wood-based panels according to the present invention can apply more 2,2'-diphenylmethane diisocyanate having low activity to the production of wood-based panels, thereby not only producing aldehyde-free environmentally-friendly wood-based panels, but also achieving sustainable development by utilizing waste materials and saving energy.

## Description

### Technical field

The present invention relates to a method of producing wood-based panels, the wood-based panels produced by the method, and use thereof.

### Background

For many years, adhesives commonly used in the manufacture of wood-based panels such as glued board, strand (flake) board, fiberboard, plywood, oriented strand board (OSB), etc., are resins based on urea formaldehyde, phenol formaldehyde or melamine formaldehyde. These formaldehyde-based resins have relatively low cost and can be milled in different types of production lines for easy processing. However, formaldehyde-based resins have the disadvantage that these resins release formaldehyde over time and can be detrimental to health when used in confined areas where ventilation is poor. Attempts have been made in the industry to use isocyanates as adhesives and to address the deficiencies of replacing urea-formaldehyde adhesives in wood-based panels with isocyanate adhesives in a variety of ways. However, isocyanates, especially those isomers with high activity, have high cost, high viscosity, and low production efficiency, which cannot be accepted by the dominating market. Therefore, it is desired in the industry to reduce the cost, while ensuring the system's sufficient activity, and at the same time improving the production efficiency of wood-based panels, and producing good aldehyde-free wood-based panels.

CN 1380346 A discloses an MDI/polypropylene polyether prepolymer composition consisting essentially of at least 80 wt% of perfect prepolymers and less than 2 wt% of free MDI monomer suitable for use in polyurethane adhesive compositions optionally also comprising a curative for isocyanate groups. A polyol composition comprising a propylene oxide based polyether polyol is also included.

CN 1330690 A discloses a process for the production of wood composite material comprising: A) combining wood particles with 1-25 wt%, based on the total weight of the wood composite material, of a binder composition consisting essentially of: (1) a polymethylene poly(phenylisocyanate) having a functionality of about 2.1 to about 3.5, an NCO group content of about 25 to 33%, and a monomer content of about 30 to about 90 wt%, wherein the content of the monomer comprises up to about 5 wt% of the 2,2'-isomer, about 1 to at most about 20 wt% of the 2,4'-isomer, and about 25 to about 65 wt% of the 4,4'-isomer, based on the entire weight of the polyisocyanate; and (2) a solid resole resin, wherein the weight ratio of the component A)(2) to component A)(1) is from 1:3 to 10:1; and B) molding or compressing the mixture formed in A), thus forming the wood composite material.

CN109535383A discloses a diisocyanate composition having a total diisocyanate content of at least 99 wt%, based on the total weight of the diisocyanate composition, and comprising: 5-15 wt% of 2,2'-diphenylmethane diisocyanate; 50-70 wt% of 2,4'-diphenylmethane diisocyanate; and 25-40 wt% of 4,4'-diphenylmethane diisocyanate, based on the total weight of the diisocyanates contained in the diisocyanate composition.

Despite the above disclosure, the market is still in urgent need of a method for producing environmentally-friendly and non-toxic wood-based panels with a better quality and high physical properties in a high yield.

### Summary of the Invention

In the first aspect of the invention, there is provided a method of producing wood-based panels, which comprises the step of producing the wood-based panels by using fibers, preferably plant fibers, and a reaction system comprising the following components:
component A) of isocyanates, including:
   A1) from 7.0 to 20 wt%, preferably from 7.6 to 20 wt%, more preferably from 8.0 to 20 wt%, and particularly preferably from 8.2 to 18 wt% of 2,2'-diphenylmethane diisocyanate, based on the total weight of the component A);
   A2) from 26 to 48 wt% of polycyclic polymeric isocyanate, based on the total weight of the component A);
   wherein the component A) of isocyanates has a viscosity of 50-160 mPa·s, preferably 60-125 mPa·s;
   and, optionally,
component B) of at least one polyol.

Preferably, the component A) of isocyanates has a content of from 1 to 10 wt%, preferably from 2.5 to 7 wt%, based on the total oven dry weight of the fibers.

Preferably, the fibers have a water content of from 1 to 25 wt%, preferably from 2 to 16 wt%, and more preferably from 3 to 15 wt%, based on the total oven dry weight of the fibers.

Preferably, the reaction system further comprises one or more of urea-formaldehyde resin, phenolic resin, polyacrylic resin, polyvinyl acetate, ethylene-modified polyvinyl acetate, polyvinyl alcohol, epoxy resin, silicone resin, unsaturated polyester, styrene resin glue, tannin resin glue, starch glue, lignin glue, and protein glue.

Preferably, the method further comprises the step of introducing the reaction system into a mold by means of a pump at a pressure of from 1.2 to 16 bar, preferably from 1.4 to 12 bar.

Preferably, the reaction system is introduced at a rate of from 1.2 to 25 kg/min, preferably from 1.5 to 20 kg/min (measured by mass flow metering).

Preferably, the yield of the wood-based panels produced by the method is ≥7 m³/h, preferably ≥ 10 m³/h, and more preferably ≥ 12 m³/h (measured by a volumetric method).

Preferably, the fibers are selected from one or more of the group consisting of sawn wood, wheat straw, bamboo stalks, shavings, cotton stalks, bagasse and reeds.

Preferably, the component A) further comprises 4,4'-diphenylmethane diisocyanate in an amount of ≤ 41 wt%, preferably from 20 to 41 wt%, and particularly preferably from 28 to 37 wt%, based on the total weight of the component A).

Preferably, the component A) further comprises 2,4'-diphenylmethane diisocyanate in an amount of ≤ 30 wt%, preferably from 5 to 25 wt%, and more preferably from 10 to 25 wt%, based on the total weight of the component A).

Preferably, the reaction system comprises no catalyst.

Preferably, the method further comprises the step of mixing the fibers with the reaction system, reacting and curing at room temperature and/or at a high temperature of preferably 90-250 °C, more preferably 200-250 °C, to obtain the wood-based panels.

It is well known to those skilled in the art that isocyanates as an adhesive or other raw materials usually contain isomers of 4,4'-diphenylmethane diisocyanate, 2,4'-diphenylmethane diisocyanate and 2,2'-diphenylmethane diisocyanate. Whether in laboratory or in industrial production, the content of 4,4'-diphenylmethane diisocyanate in isocyanates is usually very high, and in some cases even exceeds 50 wt%, thus ensuring the reactivity. Among all the isomers, 2,2'-diphenylmethane diisocyanate has the lowest activity. For example, it is mentioned in CN1330668A that WO2007/087987 teaches that: "For monomeric diphenylmethane diisocyanate, the 4,4'- and 2,4'-isomers predominate due to the synthesis. The 2,2'-isomer also occurs to a lesser extent, but is largely of no technical value." This is partly due to the findings that pure 2,2'-diphenylmethane diisocyanate cannot be used in the industry and the isocyanates containing 2,2'-diphenylmethane diisocyanate often has the disadvantage of very slow reaction, thereby leading to incompleteness of the reaction.

However, in the synthesis of isocyanates, it is unavoidable that various isomers are formed. As a result, 2,2'-diphenylmethane diisocyanate is often incinerated as waste, causing huge waste and environmental pollution. On the other hand, 4,4'-diphenylmethane diisocyanate and 2,4'-diphenylmethane diisocyanate are expensive because of their high activity.

Through repeated experiments, it has been surprisingly found that the use of a reaction system comprising 2,2'-diphenylmethane diisocyanate in an appropriate amount and isocyanates having a certain range of viscosity can not only produce excellent aldehyde-free wood-based panels, but also improve the yield and production efficiency. Moreover, a stable reaction rate can be ensured without a catalyst, and the process can be optimized and resources saved. In addition, the amounts of the expensive 4,4'-diphenylmethane diisocyanate, 2,4'-diphenylmethane diisocyanate and/or polymeric isocyanate which are generally used in large quantities in the art are correspondingly reduced, thereby saving cost and rendering it more economical and environmentally friendly.

The isocyanate adhesives used in the production of wood-based panels in the industry typically have a viscosity of 170-230 mPa·s (25 °C), and some specially modified isocyanates are even more viscous. At the same temperature, the composition of the isocyanates determines their viscosity, which in turn determines their resistance to motion. In the process of producing wood-based panels, a pump is needed to introduce the adhesive, and usually the pump system has a certain normal safe working pressure. When it is desired to increase the production efficiency of wood-based composite panels, the amount of isocyanates used is increased and thus it requires an increase in the transport amount of the isocyanates by the delivery pump, that is, an increase in the operating parameters of the pump, in case of setting the isocyanate application ratio unchanged. The increase in the transport amount of the isocyanates results in an increase in the load on the pump system and an increase in the working pressure, which may readily damage the equipment when the safe working pressure is exceeded.

The use of the method according to the present invention, in particular the use of the specific isocyanates in the reaction system, can reduce the load on the pump system, so that even at a high rotational speed and high output, the pump system is able to operate within a range of normal safe working pressure, thereby safely and effectively improving the production efficiency of wood-based composite panels.

In addition, the isocyanate adhesives used in the art are often attached to the inner wall of a mixer because of their high viscosity, which makes it difficult to clean and affects the function and life of the equipment. The isocyanate components according to the present invention greatly reduces the wall hanging phenomenon, thus making the related equipment easier to clean, better and more durable.

In another aspect of the invention, there is provided a wood-based panel produced by the aforementioned method of producing wood-based panels according to the present invention.

Preferably, the wood-based panel has a density of from 480 to 1400 kg/m³, preferably from 500 to 860 kg/m³.

In still another aspect of the invention, there is provided a wood-based panel product comprising the wood-based panel according to the present invention.

Preferably, the wood-based panel product is selected from the group consisting of a wardrobe, an office desk or chair, a bed board, a sofa chair, a cabinet, a bathroom cabinet, a pool table, and a table tennis table.

### Detailed description

Various aspects of the invention are now described in detail.

### Components of the reaction system for producing wood-based panels

### Polyisocyanate component

The reaction system used in the method for producing wood-based panels according to the present invention may comprise any organic polyisocyanates including aromatic, aliphatic and alicyclic polyisocyanates and combinations thereof. The polyisocyanates may be represented by the formula R(NCO)n, wherein R represents an aliphatic hydrocarbon group having 2 to 18 carbon atoms, an aromatic hydrocarbon group having 6 to 15 carbon atoms, and an araliphatic hydrocarbon group having 8 to 15 carbon atoms, and n = 2-4.

Useful polyisocyanates include, but are not limited to, vinyl diisocyanate, tetramethylene 1,4-diisocyanate, hexamethylene diisocyanate (HDI), dodecyl 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethyl cyclohexane, hexahydrotoluene-2,4-diisocyanate, hexahydrophenyl-1,3-diisocyanate, hexahydrophenyl-1,4-diisocyanate, perhydro-diphenylmethane 2,4-diisocyanate, perhydro-diphenylmethane 4,4-diisocyanate, phenylene 1,3-diisocyanate, phenylene 1,4-diisocyanate, stilbene 1,4-diisocyanate, 3,3-dimethyl 4,4-diphenyl diisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), a mixture of diphenylmethane diisocyanate and/or diphenylmethane diisocyanate homologues with more rings, polyphenylmethane polyisocyanate (polymeric MDI), naphthylene-1,5-diisocyanate (NDI), isomers thereof, any mixture thereof with their isomers.

Useful polyisocyanates further include isocyanates modified with carbodiimide, allophanate, or isocyanate; preferably, but not limited to, diphenylmethane diisocyanate, carbodiimide modified diphenylmethane diisocyanate, isomers thereof, a mixture thereof with their isomers.

When used in the present invention, the polyisocyanates include isocyanate dimers, trimers, tetramers, or combinations thereof.

In a preferred embodiment of the invention, the isocyanate component comprises:
A1) from 7.0 to 20 wt%, preferably from 7.6 to 20 wt%, more preferably from 8.0 to 20 wt%, and particularly preferably from 8.2 to 18 wt% of 2,2'-diphenylmethane diisocyanate, based on the total weight of the component A);
A2) from 26 to 48 wt% of polycyclic polymeric isocyanate, based on the total weight of the component A);
wherein the component A) of isocyanates has a viscosity of 50-160 mPa·s, preferably 60-125 mPa·s.

The component A) of isocyanates according to the present invention has a viscosity of 50-160 mPa·s (25 °C), preferably 60-125 mPa·s (25 °C).

Preferably, the component A) of isocyanates has a content of from 1 to 10 wt%, preferably from 2.5 to 7 wt%, based on the total oven dry weight of the fibers.

Preferably, the component A) further comprises 4,4'-diphenylmethane diisocyanate in an amount of ≤ 41 wt%, preferably from 20 to 41 wt%, and particularly preferably from 28 to 37 wt%, based on the total weight of the component A).

Preferably, the component A) further comprises 2,4'-diphenylmethane diisocyanate in an amount of ≤ 30 wt%, preferably from 5 to 25 wt%, and more preferably from 10 to 25 wt%, based on the total weight of the component A).

The polycyclic polymeric isocyanate according to the present invention refers to a polymer of a tricyclic or higher isocyanate, and does not include a polymer of a diisocyanate. The polycyclic polymeric isocyanate used in the present invention has a viscosity greater than that of the polymeric isocyanates commonly used in the art, but unexpectedly, it has been found that in combination with other isocyanate components according to the present invention, a reaction system having a lower overall viscosity can be obtained. Moreover, as described above, the method of producing wood-based panels according to the present invention can greatly increase the yield of wood-based panels.

### Polyol component

The polyols according to the present invention are preferably a plurality of polyether polyols and/or mixtures thereof, wherein at least one polyether polyol is a polyol starting with glycerol. The polyether polyols have a functionality of from 2 to 4 and a hydroxyl number of from 20 to 600, preferably from 50 to 500, and particularly preferably from 300 to 400.

The polyether polyols can be prepared by known processes. Usually, they are prepared by mixing ethylene oxide or propylene oxide with ethylene glycol, 1,2-propanediol, 1,3-propanediol, diethylene glycol, glycerol, trimethylolpropane, pentaerythritol, triethanolamine, toluenediamine, sorbitol and sucrose and using glycerol or propylene glycol as a starting agent.

Further, the polyether polyols may also be prepared by reacting at least one alkylene oxide with the alkylene having 2 to 4 carbon atoms with compounds containing 2 to 8, preferably but not limited to, 3 to 8 active hydrogen atoms or other reactive compounds in the presence of a catalyst.

Examples of the catalyst are alkali metal hydroxides such as sodium hydroxide, potassium hydroxide, or alkali metal alkoxides such as sodium methoxide, sodium ethoxide or potassium ethoxide or potassium isopropoxide.

Useful alkylene oxides include, but are not limited to, tetrahydrofuran, ethylene oxide, 1,2-propylene oxide, 1,2-butylene oxide, 2,3-butylene oxide, styrene oxide, and any mixture thereof.

Useful compounds containing active hydrogen atoms include polyhydroxy compounds, preferably but not limited to, water, ethylene glycol, 1,2-propanediol, 1,3-propanediol, diethylene glycol, trimethylolpropane, any mixture thereof; more preferably polyols, especially ternary or higher polyhydric alcohols such as glycerol, trimethylolpropane, pentaerythritol, sorbitol and sucrose. Useful compounds containing active hydrogen atoms also include, but are not limited to, organic dicarboxylic acids such as succinic acid, adipic acid, phthalic acid and terephthalic acid, or aromatic or aliphatic substituted diamines such as ethylenediamine, diethylenetriamine, triethylenetetramine, propylenediamine, butanediamine, hexamethylenediamine or toluenediamine.

When used in the present invention, the term "alkylene oxide compounds" generally refers to those having the following general formula (I): 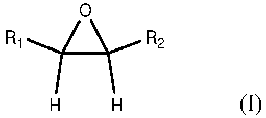 wherein R₁ and R₂ are independently selected from the group consisting of H, linear and branched C₁-C₆ alkyl groups, and phenyl and substituted phenyl groups.

Preferably, R₁ and R₂ are independently selected from the group consisting of H, methyl, ethyl, propyl and phenyl.

The methods of producing "alkylene oxide compounds" are known to those skilled in the art. For example, they can be obtained by an oxidation reaction of an olefin compound.

Examples of the alkylene oxide compounds useful in the present invention include, but are not limited to, ethylene oxide, 1,2-propylene oxide, 1,2-butylene oxide, 2,3-butylene oxide, styrene oxide or a mixture thereof, particularly preferably a mixture of ethylene oxide and 1,2-propylene oxide.

When used in the present invention, the term "alkylene oxide compounds" also includes oxacycloalkanes, examples of which include, but are not limited to, tetrahydrofuran and oxetane.

When used in the present invention, the term "amines" refers to compounds containing a primary amino group, a secondary amino group, a tertiary amino group, or a combination thereof. Examples of the amine compounds useful in the present invention include, but are not limited to, triethanolamine, ethylenediamine, toluenediamine, diethylenetriamine, triethylenetetramine, and derivatives thereof, preferably ethylenediamine, toluenediamine, and particularly preferably toluenediamine.

### Catalyst

Catalysts optionally useful in the present invention include, but are not limited to, amine catalysts and alkali metal catalysts. Suitable amine catalysts may be one or more of triethylamine, tributylamine, triethylenediamine, N-ethylmorpholine, N,N,N',N'-tetramethyl-ethylenediamine, pentamethyldiethylene-triamine, N,N-methylaniline, N,N-dimethylaniline. Preferably, the reaction system according to the present invention comprises no catalyst.

Through repeated experiments, it has been surprisingly found that no catalyst is required to improve the activity when using a reaction system comprising 2,2'-diphenylmethane diisocyanate in an appropriate amount and isocyanates having a certain range of viscosity, that is, without a catalyst, it is also possible to produce excellent aldehyde-free wood-based panels, with the cost saved and the process optimized. Moreover, it is also possible to increase the yield and production efficiency of wood-based panels.

In a preferred embodiment of the invention, the fibers have a water content of from 1 to 25 wt%, preferably from 2 to 16 wt%, and more preferably from 3 to 15 wt%, based on the total oven dry weight of the fibers.

Preferably, the reaction system further comprises one or more of urea-formaldehyde resin, phenolic resin, polyacrylic resin, polyvinyl acetate, ethylene-modified polyvinyl acetate, polyvinyl alcohol, epoxy resin, silicone resin, unsaturated polyester, styrene resin glue, tannin resin glue, starch glue, lignin glue, and protein glue.

Preferably, the method further comprises the step of introducing the reaction system into a mold by means of a pump at a pressure of from 1.2 to 16 bar, preferably from 1.4 to 12 bar.

Preferably, the reaction system is introduced at a rate of from 1.2 to 25 kg/min, preferably from 1.5 to 20 kg/min (measured by mass flow metering).

Preferably, the yield of the wood-based panels produced by the method is ≥7 m³/h, preferably ≥ 10 m³/h, and more preferably ≥12 m³/h (measured by a volumetric method).

Preferably, the fibers are selected from one or more of the group consisting of sawn wood, wheat straw, bamboo stalks, shavings, cotton stalks, bagasse and reeds.

Preferably, the reaction system comprises no catalyst.

Preferably, the method further comprises the step of mixing the fibers with the reaction system, reacting and curing at room temperature and/or at a high temperature of preferably 90-250 °C, more preferably 200-250 °C, to obtain the wood-based panels.

All technical and scientific terms used herein have the same meaning as commonly understood by those skilled in the art to which the present invention belongs, unless otherwise specified. When the definition of a term in the present context conflicts with the meaning as commonly understood by those skilled in the art to which the present invention belongs, the definition described herein shall apply.

All numerical values expressing amount of ingredients, reaction conditions and the like which are used in the present context and claims are to be understood as being modified by the term "about", unless otherwise specified.

The term "and/or" used herein refers to one or all of the elements mentioned.

The terms "containing", "including" and "comprising" used herein cover both the case that there are only the elements mentioned and the case that there are also other elements unmentioned in addition to the elements mentioned.

All percentages in the present context refer to weight percentage, unless otherwise specified.

The present invention will now be described by way of examples for purposes of illustration, but not for limitation.

### Examples

### Test project and test method description:

Density refers to the calculated density of a wood-based panel sample, measured in accordance with GB/T17657-2013.

Yield refers to the unit yield of wood-based panels, and is calculated as the cumulative value of the volume (m³, cubic meter) of the wood-based panels produced per unit time (h, hour).

Internal bonding force refers to the internal bonding strength of wood-based panels, measured in accordance with GB/T17657-2013.

Raw material description:
Isocyanate 1, comprising 8.5 wt% of 2,2'-diphenylmethane diisocyanate (2,2'-MDI), 23.3 wt% of 2,4'-diphenylmethane diisocyanate (2,4'-MDI), 30.2 wt% of 4,4'-diphenylmethane diisocyanate (4,4'-MDI), 37.7 wt% of polycyclic polymeric isocyanate, based on the total weight of the isocyanate 1, having a viscosity of 80 mPa·s (25 °C), purchased from Covestro Polymers (China) Co., Ltd.
Isocyanate 2, Desmodur 1520 A 20, having a 2,2'-diphenylmethane diisocyanate (2,2'-MDI) content of 0% and a polycyclic polymeric isocyanate content of 54 wt%, having a viscosity of 205 mPa·s (25 °C), purchased from Covestro Polymers (China) Co., Ltd.
Rubber wood 1 (having a water content of 3.6 wt%), purchased from local farmers in Hainan;
Rubber wood 2 (having a water content of 13.4 wt%), purchased from local farmers in Hainan.

### Example 1:

The shavings of the rubber wood 1 and the rubber wood 2 were continuously fed into a mold at a weight ratio of 6:4, and the isocyanate 1 (having an applying weight of 3% based on the weight of oven dry wood) was introduced into the mold by means of a pump at a pressure of 1.65-1.85 bar at a rate of 1.2-25 kg/min. The mold was heated to 220 °C for a heating (at a pressure of 0.3-4.2 N/mm2) time of about 7.11 s/mm. The wood-based panel was obtained after the isocyanate was cured.

The transport amount of the isocyanate 1 in Example 1 was 5.3 kg/min, the working pressure of the pump was 1.69 bar, and the operating parameter was 602 rpm. Thus, it can be calculated that the yield of the wood-based panel of preparation Example 1 was 15.9 m³/h.

The produced wood-based panel was tested to find that its density reached 675 kg/m³ and the internal bonding force of the panel was 0.65 MPa.

### Comparative Example 1:

The shavings of the rubber wood 1 and the rubber wood 2 were continuously fed into a mold at a weight ratio of 6:4, and the isocyanate 2 (having an applying weight of 3 wt% based on the weight of oven dry wood) was introduced into the mold by means of a pump at a pressure of 1.65-1.85 bar at a rate of 1.2-25 kg/min. The mold was heated to 220 °C for a heating (at a pressure of 0.3-4.2 N/mm2) time of about 7.11 s/mm. The wood-based panel was obtained after the isocyanate was cured.

The transport amount of the isocyanate 2 in the comparative Example was 2.0 kg/min, the working pressure of the pump was 1.84 bar, and the operating parameter was 356 rpm. Thus, it can be calculated that the yield of the wood-based panel of the comparative praparation Example was 6 m³/h.

The produced wood-based panel was tested to find that its density reached 680 kg/m³, the yield of the wood-based composite panel was, and the internal bonding force of the panel was 0.68 MPa.

When comparing the inventive Example with the comparative Example, it can be seen that the yield of the wood-based panel can reach 15.9 m³/h by using the inventive isocyanate 1 in place of the existing isocyanate 2, thereby greatly increasing the yield and production efficiency. Moreover, the wood-based panel produced by the method of Example 1 possessed a density and an internal bonding force close to those in the comparative Example.

While the foregoing detailed description of the invention is given for the purposes of the invention, it is to be understood that this detailed description is exemplary in nature, and various changes can be made by those skilled in the art in addition to the contents defined by the claims, without departing from the spirit and scope of the invention.

## Claims

1. A method of producing wood-based panels, which comprises the step of producing the wood-based panels by using fibers, preferably plant fibers, and a reaction system comprising the following components:
component A) of isocyanates, including:
A1) from 7.0 to 20 wt%, preferably from 7.6 to 20 wt%, more preferably from 8.0 to 20 wt%, and particularly preferably from 8.2 to 18 wt% of 2,2'-diphenylmethane diisocyanate, based on the total weight of the component A);
A2) from 26 to 48 wt% of polycyclic polymeric isocyanate, based on the total weight of the component A);
wherein the component A) of isocyanates has a viscosity of 50-160 mPa·s, preferably 60-125 mPa·s;
and, optionally,
component B) of at least one polyol.

2. The method according to claim 1, **characterized in that** the isocyanates have a content of from 1 to 10 wt%, preferably from 2.5 to 7 wt%, based on the total oven dry weight of the fibers.

3. The method according to claim 1, **characterized in that** the fibers have a water content of from 1 to 25 wt%, preferably from 2 to 16 wt%, and more preferably from 3 to 15 wt%, based on the total oven dry weight of the fibers.

4. The method according to claim 1 or 2, **characterized in that** the reaction system further comprises one or more of urea-formaldehyde resin, phenolic resin, polyacrylic resin, polyvinyl acetate, ethylene-modified polyvinyl acetate, polyvinyl alcohol, epoxy resin, silicone resin, unsaturated polyester, styrene resin glue, tannin resin glue, starch glue, lignin glue, and protein glue.

5. The method according to claim 1 or 2, **characterized in that** it further comprises the step of introducing the reaction system into a mold by means of a pump at a pressure of from 1.2 to 16 bar, preferably from 1.4 to 12 bar.

6. The method according to claim 5, **characterized in that** the reaction system is introduced at a rate of from 1.2 to 25 kg/min, preferably from 1.5 to 20 kg/min (measured by mass flow metering).

7. The method according to claim 1 or 2, **characterized in that** the yield of the wood-based panels produced by the method is ≥7 m³/h, preferably ≥10 m³/h, and more preferably ≥12 m³/h (measured by a volumetric method).

8. The method according to claim 1 or 2, **characterized in that** the fibers are selected from one or more of the group consisting of sawn wood, wheat straw, bamboo stalks, shavings, cotton stalks, bagasse and reeds.

9. The method according to claim 1 or 2, **characterized in that** the component A) further comprises 4,4'-diphenylmethane diisocyanate in an amount of ≤ 41 wt%, preferably from 20 to 41 wt%, and particularly preferably from 28 to 37 wt%, based on the total weight of the component A).

10. The method according to claim 1 or 2, **characterized in that** the component A) further comprises 2,4'-diphenylmethane diisocyanate in an amount of ≤ 30 wt%, preferably from 5 to 25 wt%, and more preferably from 10 to 25 wt%, based on the total weight of the component A).

11. The method according to claim 1 or 2, **characterized in that** the reaction system comprises no catalyst.

12. The method according to claim 1 or 2, **characterized in that** it further comprises the step of mixing the fibers with the reaction system, reacting and curing at room temperature and/or at a high temperature of preferably 90-250 °C, more preferably 200-250 °C, to obtain the wood-based panels.

13. A wood-based panel produced by the method of producing wood-based panels according to any one of claims 1-12.

14. The wood-based panel according to claim 13, **characterized in that** the wood-based panel has a density of from 480 to 1400 kg/m³, preferably from 500 to 860 kg/m³ (measured in accordance with GB/T17657-2013).

15. A wood-based panel product comprising the wood-based panel according to claim 13 or 14.

16. The wood-based panel product according to claim 15, **characterized in that** the wood-based panel product is selected from the group consisting of a wardrobe, an office desk or chair, a bed board, a sofa chair, a cabinet, a bathroom cabinet, a pool table, and a table tennis table.
